# EUROPEAN PATENT APPLICATION

(11) **EP 4 733 354 A1**
(43) Date of publication of application: **29.04.2026**
(21) Application number: 25186154.8
(22) Date of filing: 30.06.2025
(51) Int. Cl.: C08L 23/12

(54) **A POLYMER COMPOSITE MATERIAL AND METHOD FOR PREPARING A POLYMER COMPOSITE MATERIAL**

(30) Priority: 22.10.2024 TR 2024143600
(71) Applicant: Arçelik Anonim Sirketi, 34445 Istanbul (TR)
(72) Inventor: BAYSEC GEMCI, SEBNEM, 34445 ISTANBUL (TR); KAYA, ZEYNEP, 34445 ISTANBUL (TR); CIHANGIR, METEHAN, 34445 ISTANBUL (TR); KOVANCI, CEREN, 34445 ISTANBUL (TR); MANDAL, SEFA KEMAL, 34445 ISTANBUL (TR)

(57) **Abstract**

The present invention relates to a polymer composite comprising a polymer selected from a group comprising polyethylene, polypropylene, or polystyrene, at least one citrus peel waste, and at least one acid scavenger.

## Description

The present invention relates to a polymer composite material, a method for preparing the same, and a household appliance wherein the polymer composite material is used.

Nowadays, commonly known and used plastics are derived from fossil fuels such as petroleum and coal. In recent years, increasing environmental concerns and the aim to reduce dependence on petrochemical raw materials have led the industry to shift toward renewable resources.

Biopolymers, in other words bioplastics, are plastics obtained from biological sources. Many types of bioplastics are biodegradable and naturally decompose over time in nature. Polypropylene (PP) produced with the addition of citrus is among the bestknown types of bioplastics.

Today, the users of household appliances, especially dishwashers, commonly adopt the use of citrus in kitchens to make dishes shine and eliminate potential plastic odors from dishwashers. The citrus fruits used become waste once they lose their properties of providing shine and odor elimination, and new ones are used in their place. The active compounds found in the peels of citrus fruits are the source of the desired shine and odor characteristics. However, this method leads to the citrus becoming waste and necessitates constant citrus consumption.

Citrus varieties, especially lemon, grapefruit, orange, and mandarin, are fruits widely cultivated around the world, with increasing production each year due to rising consumer demand. The annual production ranges from 110 to 124 million tons, and a significant portion of these fruits is wasted during industrial processing. The wasted parts include the peel, pulp, and seeds of the fruit. These wastes contain phytochemicals and various organic compounds with high economic value. Said citrus waste can be reused in different sectors such as pharmaceuticals, packaging, food, and cosmetics. This provides significant advantages both economically and in terms of sustainability.

During the integration of citrus waste, particularly lemon peel, into plastic production processes, various problems arise. Citric acid naturally found in lemon peel undergoes thermal decomposition when exposed to high temperatures during plastic processing. Specifically, at temperatures above 153°C, citric acid decomposes, releasing water molecules, forming aconitic acid as an intermediate, and subsequently emitting volatile compounds such as CO₂, CO, and acetone. Such degradation products cause undesirable effects such as gas release, explosions, and filament breakage in plastic processing. Moreover, a moist appearance is observed on the surfaces of plastic parts produced with resins containing bio-based additives with citric acid, adversely affecting surface quality during injection molding.

In known methods, plasticizers, compatibilizers, lubricants for process improvement, and mineral fillers for providing rigidity are used within formulations. However, none of these methods address the root of the problem, which is the prevention of citric acid degradation. They merely mask the effects of degradation.

All these problems adversely affect process continuity in plastic production, reduce production efficiency, and pose risks in terms of occupational health and safety.

The aim of the present invention is the realization of a polymer composite and a polymer composite preparation method which recycles citrus waste discarded and accumulated in nature and provides plastic parts suitable for use in household appliances, preventing odor issues experienced inside the household appliance.

Another aim of the present invention is the realization of a polymer composite and a polymer composite preparation method optimized for use in extrusion and injection processes so as to resolve problems such as explosion and filament breakage caused by citric acid in citrus waste.

Yet another aim of the present invention is the realization of a polymer composite and a polymer composite preparation method which prevents the increase in plastic odor inside household appliances during storage of the product after plastic production.

Yet another aim of the present invention is the realization of a polymer composite and a polymer composite preparation method having higher mechanical strength and hydrolytic stability compared to the currently used plastic materials.

The present invention is a polymer composite which is prepared with a polymer material and an organic waste material, and a polymer composite preparation method. In some embodiments of the present invention, such a polymer may be selected from among virgin and recycled (i.e., post-consumer) polymers. In some embodiments of the present invention, such a polymer may be polyethylene, polypropylene, or polystyrene and their derivatives.

In an embodiment of the present invention, polystyrene and its derivatives are ABS (Acrylonitrile Butadiene Styrene) and HIPS (High Impact Polystyrene).

The polymer composite material of the present invention comprises one or more polymers selected from a group comprising polyethylene, polypropylene, or polystyrene, at least one citrus peel waste, and at least one acid scavenger. Thus, a polymer composite having high mechanical strength and hydrolytic stability is provided.

In an embodiment of the present invention, the mass of one or more polymers selected from a group comprising polyethylene, polypropylene, or polystyrene is between 50% and 70% of the total mass of the polymer composite material.

In an embodiment of the present invention, the mass of the polymer is preferably polypropylene and is between 50% and 70% of the total mass of the polymer composite material.

In an embodiment of the present invention, citrus peel wastes are the peels remaining after the processing or consumption of citrus fruits such as orange, lemon, grapefruit, and mandarin. These wastes generally comprise the fibrous part of the peel (pectin), essential oils, flavonoids, dry matter and fibers, sugars, pigments, tannins, and organic acids such as citric acid present in the peels.

In an embodiment of the present invention, the mass of the citrus peel waste is between 5% and 10% of the total mass of the polymer composite material.

In an embodiment of the present invention, the polymer composite material comprises at least one acid scavenger compound selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), chromium (Cr) with carbonate (CO₃²⁻), sulfate (SO₄²⁻), nitrate (NO₃⁻), chloride (Cl⁻), or hydroxide (OH⁻) anions.

In an embodiment of the present invention, the polymer composite material preferably comprises at least one acid scavenger compound selected from the acid scavenger compound group formed by the reaction of divalent metal ions such as magnesium (Mg), nickel (Ni), zinc (Zn), copper (Cu), manganese (Mn), or trivalent metal ions such as aluminum (Al), iron (Fe), chromium (Cr) with hydroxide (OH⁻) anion.

In an embodiment of the present invention, the mass of the acid scavenger compound is between 0.01% and 8% of the total mass of the polymer composite material.

In an embodiment of the present invention, the polymer composite material further comprises at least one compatibilizer.

In an embodiment of the present invention, the compatibilizer additive is selected from a group comprising ethylene-vinyl acetate (EVA), ethylene-acrylic acid (EAA), maleic anhydride grafted polyethylene, polypropylene, or polystyrene groups (polymer-g-MAH), styrene-butadiene-styrene (SBS) or other block copolymers, organic peroxides, silane coupling agents, isocyanate-based compatibilizers, and acrylic acid grafted polypropylene (PP-g-AA).

In an embodiment of the present invention, the mass of the compatibilizer additive is between 0.01% and 8% of the total mass of the polymer composite material.

In an embodiment of the present invention, the compatibilizer additive is maleic anhydride grafted polypropylene.

In an embodiment of the present invention, the polymer composite material further comprises at least one processing aid.

In an embodiment of the present invention, the processing aid (lubricant) is selected from a group comprising stearates, for example, calcium stearate, zinc stearate, or paraffin esters or mineral esters. Thus, the citrus peel waste, which tends to degrade at low temperatures, is prevented from decomposing during plastic processing temperatures.

In an embodiment of the present invention, mineral esters are selected as the processing aid.

In an embodiment of the present invention, the mass of the processing aid (lubricant) is between 0.01% and 8% of the total mass of the polymer composite material.

In an embodiment of the present invention, the polymer composite material further comprises at least one mineral filler.

In an embodiment of the present invention, the mineral filler is selected from a group comprising calcium carbonate (CaCO₃), talc, mica, kaolin (China clay), silica (SiO₂), barium sulfate (BaSO₄), alumina trihydrate (ATH), chalk (calcium sulfate - CaSO₄), wollastonite (CaSiO₃), limestone, glass fiber, pyrophyllite, and dolomite (CaMg(CO₃)₂). Thus, the mechanical properties of the polymer composite are improved.

In an embodiment of the present invention, the mass of the mineral filler is between 5% and 30% of the total mass of the polymer composite material.

In an embodiment of the present invention, the polymer composite material comprises polypropylene; at least one citrus peel waste selected from a group comprising orange, lemon, grapefruit, and mandarin; and at least one acid scavenger compound selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), chromium (Cr) with hydroxide (OH⁻) anion. In the polymer composite material, as a result of the reaction of the citrus peel waste with the acid scavenger, the degradation of citric acid originating from the citrus peel waste is prevented such that gas emissions, explosions, and filament breakage during plastic processing are eliminated. Moreover, the moist appearance occurring on the surfaces of plastic parts produced with bio-additives containing citric acid, and the associated deterioration in surface quality during the injection process, are also prevented.

In an embodiment of the present invention, the polymer composite material comprises polypropylene which constitutes 50% to 70% of the total polymer composite mass, at least one citrus peel waste selected from a group comprising lemon, grapefruit, and mandarin, which constitutes 5% to 10% of the total polymer composite mass, and at least one acid scavenger compound, which constitutes 0.01% to 8% of the total polymer composite material mass, selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), and chromium (Cr) with hydroxide (OH⁻) anion.

In an embodiment of the present invention, the polymer composite material further comprises 1% to 5% of masterbatch to enhance color and odor perception.

In an embodiment of the present invention, the polymer composite material comprises a polymer selected from a group comprising polyethylene, polypropylene, or polystyrene, which constitutes 50% to 70% of the total polymer composite mass; at least one citrus peel waste which constitutes 5% to 10% of the total polymer composite mass; at least one acid scavenger compound, which constitutes 0.01% to 8% of the total polymer composite mass, selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), and chromium (Cr) with carbonate (CO₃²⁻), sulfate (SO₄²⁻), nitrate (NO₃⁻), chloride (Cl⁻), or hydroxide (OH⁻) anions; at least one compatibilizer additive which constitutes 0.01% to 8% of the total polymer composite mass; at least one processing aid (lubricant) which constitutes 0.01% to 8% of the total polymer composite mass; and at least one mineral filler which constitutes 5% to 30% of the total polymer composite mass.

In an embodiment of the present invention, the polymer composite material comprises polypropylene which constitutes 50% to 70% of the total polymer composite mass; lemon peel waste which constitutes 5% to 10% of the total polymer composite mass; at least one acid scavenger, which constitutes 0.01% to 8% of the total polymer composite mass, selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), and chromium (Cr) with hydroxide (OH⁻) anion; maleic anhydride grafted polypropylene which constitutes 0.01% to 8% of the total polymer composite mass; mineral ester which constitutes 0.01% to 8% of the total polymer composite mass; and talc which constitutes 5% to 30% of the total polymer composite mass.

In an embodiment of the present invention, the polymer composite described above is suitable for use in household appliances such as dishwashers, refrigerators, and washing machines.

In an embodiment of the present invention, the polymer composite is used in the knife holder, handle of the cutlery basket, and upper and lower rack handles of a dishwasher.

In an embodiment of the present invention, polypropylene and citrus peel waste are mixed in an extruder to obtain the polymer composite material. Citrus peel waste naturally contains various amounts of citric acid. During the polymer composite process, the citric acid content causes gas release and explosions. All of these affect process continuity. As shown in Figure 1, during the said mixing, carbonate ions present in acid scavengers such as hydrotalcite, metallic stearate, and zinc oxide exchange with citrate ions found in citrus peel waste and settle into the layers of the acid scavenger. The resulting cage structure (intercalated structure) prevents degradation of citric acid at high temperatures, minimizing foaming and explosions which cause problems during processing, as well as carbon dioxide (CO₂) release which leads to moist parts during injection.

In the polymer composite process of the present invention:
- Dehydration of Citric Acid:

   C₆H₈0₇→C₆H₆O₆+H₂O.
- Decomposition of Aconitic Acid:

   C₆H₆O₆ → 3CO₂ + 3H₂O + other organic byproducts.

The amount of carbon dioxide released during the decomposition of aconitic acid causes foaming during the extrusion of the polymer composite, resulting in explosions and surface defects on the filament.

In an embodiment of the present invention, in the developed polymer composite structure, the moisture content of all materials, including citrus peel waste, should be kept to a minimum. During the extrusion stage of the polymer composite, the screw type, screw rotation speed, and barrel temperature are critical to prevent the burning and degradation of lemon before interacting with the acid scavenger.

**Table 1: Compounds in the polymer composite material and their mass percentages**

| **Compound** | **Mass Percentage** |
|---|---|
| Polymer | 50% to 70% |
| Acid scavenger | 0.01% to 8% |
| Citrus peel waste | 5% to 10% |
| Compatibilizer | 0.01% to 8% |
| Processing aid | 0.01% to 8% |
| Mineral filler | 5% to 30% |
| Polypropylene | 50% to 70% |
| Acid scavenger based on Magnesium or Nickel or Zinc or Copper or Manganese | 0.01% to 8% |
| Lemon peel waste | 5% to 10% |
| Maleic anhydride grafted polypropylene | 0.01% to 8% |
| Mineral esters | 0.01% to 8% |
| Talc | 5% to 30% |

**Table 2: Mechanical properties of the polymer composite when comparing the extrusion of polypropylene alone and the extrusion of polypropylene together with citrus peel waste and acid scavenger**

| | **Polypropylene** | **Polypropylene + Citrus Peel Waste + Acid Scavenger** |
|---|---|---|
| **Mechanical Property** | | |
| E Modulus | 2156 Mpa | 3270 Mpa |
| Yield Strength, | 27 Mpa | 38 Mpa |
| Tensile Strength, | 27 Mpa | 38 Mpa |
| Flexural Modulus | 1870 Mpa | 2810 Mpa |
| Flexural Strength | 39 Mpa | 61 Mpa |

When the values shown in Table 2 are compared, the mechanical properties of the polymer composite material comprising a polymer selected from a group comprising polyethylene, polypropylene, or polystyrene, which constitutes 50% to 70% of the total polymer composite mass; at least one citrus peel waste which constitutes 5% to 10% of the total polymer composite mass; at least one acid scavenger compound, which constitutes 0.01% to 8% of the total polymer composite mass, selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), and chromium (Cr) with carbonate (CO₃²⁻), sulfate (SO₄²⁻), nitrate (NO₃⁻), chloride (Cl⁻), or hydroxide (OH⁻) anions; at least one compatibilizer additive which constitutes 0.01% to 8% of the total polymer composite mass; at least one processing aid (lubricant) which constitutes 0.01% to 8% of the total polymer composite mass; and at least one mineral filler which constitutes 5% to 30% of the total polymer composite mass are improved by approximately 50%.

The present invention is a polymer composite preparation method comprising the steps of
- preparing undersized citrus peel waste,
- drying the undersized citrus peel waste in an oven to reduce the moisture content,
- mixing a polymer selected from a group including polyethylene, polypropylene, or polystyrene and citrus peel waste powder in a twin-screw extruder,
- adding at least one acid scavenger to reduce the citric acid (C₆H₈O₇) content originating from citrus peel waste and to capture the CO₂ released during processing, and
- enabling carbonate ions present in the acid scavenger to exchange with citrate ions in the citrus peel waste and settle into the layers of the acid scavenger.

In an embodiment of the present invention, the polymer composite preparation method further comprises the step of adding a processing aid. Thus, the polymer composite material is protected against thermal degradation.

In an embodiment of the present invention, the polymer composite preparation method further comprises the step of adding a mineral filler. Thus, the mechanical properties of the polymer composite material are improved.

In an embodiment of the present invention, the polymer composite preparation method comprises the step of drying the citrus peel waste in an oven at 60°C for 24 hours to reduce the moisture content thereof.

In the polymer composite preparation method of the present invention, the mass of one or more polymers selected from a group including polyethylene, polypropylene, or polystyrene is 50% to 70% of the total mass of the polymer composite material.

In an embodiment of the present invention, the method comprises polypropylene, and the mass of the polymer is 50% to 70% of the polymer composite material mass.

In the polymer composite preparation method, citrus peel wastes are the peels remaining after the processing or consumption of citrus fruits such as orange, lemon, grapefruit, and mandarin. These wastes generally comprise the fibrous part of the peel (pectin), essential oils, flavonoids, dry matter and fibers, sugars, pigments, tannins, and organic acids such as citric acid present in the peels.

In an embodiment of the present invention, the polymer composite preparation method comprises citrus peel waste in the range of 5% to 10% of the total mass of the polymer composite material.

In an embodiment of the present invention, the polymer composite preparation method comprises at least one acid scavenger compound selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), chromium (Cr) with carbonate (CO₃²⁻), sulfate (SO₄²⁻), nitrate (NO₃⁻), chloride (Cl⁻), or hydroxide (OH⁻) anions.

In an embodiment of the present invention, the polymer composite preparation method comprises acid scavenger content in the range of 0.01% to 8% of the total mass of the polymer composite material.

In an embodiment of the present invention, in the polymer composite preparation method, the compatibilizer additive is selected from a group comprising ethylene-vinyl acetate (EVA), ethylene-acrylic acid (EAA), maleic anhydride grafted polyethylene, polypropylene, or polystyrene groups (polymer-g-MAH), styrene-butadiene-styrene (SBS) or other block copolymers, organic peroxides, silane coupling agents, isocyanate-based compatibilizers, and acrylic acid grafted polypropylene (PP-g-AA).

In an embodiment of the present invention, the polymer composite preparation method comprises compatibilizer additive in the range of 0.01% to 8% by the total mass of the polymer composite material.

In the polymer composite preparation method, the compatibilizer additive is preferably maleic anhydride grafted polypropylene.

In the polymer composite preparation method, the processing aid (lubricant) is selected from a group comprising stearates such as calcium stearate, zinc stearate, or paraffins. Thus, the degradation of the citrus peel waste at low temperatures is prevented.

In an embodiment of the present invention, the polymer composite preparation method comprises processing aid (lubricant) in the range of 0.01% to 8% by the total mass of the polymer composite material.

In an embodiment of the present invention, in the polymer composite preparation method, the mineral filler is selected from a group comprising calcium carbonate (CaCO₃), talc, mica, kaolin (China clay), silica (SiO₂), barium sulfate (BaSO₄), alumina trihydrate (ATH), chalk (calcium sulfate - CaSO₄), wollastonite (CaSiO₃), limestone, glass fiber, pyrophyllite, and dolomite (CaMg(CO₃)₂). Thus, the mechanical properties of the polymer composite are improved.

In an embodiment of the present invention, the polymer composite preparation method comprises mineral filler in the range of 5% to 30% of the total mass of the polymer composite material.

In an embodiment of the present invention, the speed of the twin-screw extruder is in the range of 200 to 400 rpm.

In an embodiment of the present invention, the extruder temperature is in the range of 150 to 210°C.

In an embodiment of the present invention, the polymer composite preparation method comprises the step of processing at an injection molding temperature of approximately 170 to 210°C.

In an embodiment of the present invention, the polymer composite material is used in wine glass holders and handles in dishwashers.

## Claims

1. A polymer composite **characterized by** comprising a polymer selected from a group comprising polyethylene, polypropylene, or polystyrene, at least one citrus peel waste, and at least one acid scavenger.

2. A polymer composite as in Claim 1, **characterized in that** the mass of a polymer selected from a group comprising polyethylene, polypropylene, or polystyrene is between 50% and 70% of the total mass of the polymer composite material.

3. A polymer composite as in Claim 1 or 2, **characterized by** comprising polypropylene.

4. A polymer composite as in any one of the above claims, **characterized by** comprising at least one acid scavenger compound selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), chromium (Cr) with carbonate (CO₃²⁻), sulfate (SO₄²⁻), nitrate (NO₃⁻), chloride (Cl⁻), or hydroxide (OH⁻) anions.

5. A polymer composite as in any one of the above claims, **characterized by** a compatibilizer additive which is selected from a group comprising ethylene-vinyl acetate (EVA), ethylene-acrylic acid (EAA), maleic anhydride grafted polyethylene, polypropylene, or polystyrene groups (polymer-g-MAH), styrene-butadiene-styrene (SBS) or other block copolymers, organic peroxides, silane coupling agents, isocyanate-based compatibilizers, and acrylic acid grafted polypropylene (PP-g-AA).

6. A polymer composite as in any one of the above claims, **characterized in that** the compatibilizer additive is maleic anhydride grafted polypropylene.

7. A polymer composite as in any one of the above claims, **characterized by** comprising at least one processing aid selected from a group comprising calcium stearate, zinc stearate, or paraffins.

8. A polymer composite as in any one of the above claims, **characterized by** at least one mineral filler which is selected from a group comprising calcium carbonate (CaCO₃), talc, mica, kaolin (China clay), silica (SiO₂), barium sulfate (BaSO₄), alumina trihydrate (ATH), chalk (calcium sulfate - CaSO₄), wollastonite (CaSiO₃), limestone, glass fiber, pyrophyllite, and dolomite (CaMg(CO₃)₂).

9. A polymer composite as in any one of the above claims, **characterized by** comprising a polymer selected from a group comprising polyethylene, polypropylene, or polystyrene, which constitutes 50% to 70% of the total polymer composite mass; at least one citrus peel waste which constitutes 5% to 10% of the total polymer composite mass; at least one acid scavenger compound, which constitutes 0.01% to 8% of the total polymer composite mass, selected from acid scavenger compounds formed by the reaction of divalent metal ions such as magnesium (Mg), nickel (Ni), zinc (Zn), copper (Cu), manganese (Mn), or trivalent metal ions such as aluminum (Al), iron (Fe), and chromium (Cr) with carbonate (CO₃²⁻), sulfate (SO₄²⁻), nitrate (NO₃⁻), chloride (Cl⁻), or hydroxide (OH⁻) anions; at least one compatibilizer additive which constitutes 0.01% to 8% of the total polymer composite mass; at least one processing aid (lubricant) which constitutes 0.01% to 8% of the total polymer composite mass; and at least one mineral filler which constitutes 5% to 30% of the total polymer composite mass.

10. A household appliance **characterized by** comprising a polymer composite as in any one of Claims 1 to 9.

11. A polymer composite preparation method as in any one of Claims 1 to 10, **characterized by** the steps of
- preparing undersized citrus peel waste,
- drying the undersized citrus peel waste in an oven to reduce the moisture content,
- mixing a polymer selected from a group including polyethylene, polypropylene, or polystyrene and citrus peel waste powder in a twin-screw extruder,
- adding at least one acid scavenger to reduce the citric acid (C₆H₈O₇) content originating from citrus peel waste and to capture the CO₂ released during processing, and
- enabling carbonate ions present in the acid scavenger to exchange with citrate ions in the citrus peel waste and settle into the layers of the acid scavenger.

12. A polymer composite preparation method as in Claim 11, **characterized by** adding at least one processing aid.

13. A polymer composite preparation method as in Claim 11 or 12, **characterized by** adding at least one mineral filler.

14. A polymer composite preparation method as in any one of Claims 11 to 13, **characterized by** drying the citrus peel waste in an oven at 60°C for 24 hours to reduce the moisture content thereof.

15. A polymer composite preparation method as in Claim 14, **characterized in that** the twin-screw extruder speed is in the range of 200 to 400 rpm.
